# EUROPÄISCHE PATENTSCHRIFT

(11) **EP 2 477 085 B1**
(45) Veröffentlichungstag und Bekanntmachung des Hinweises auf die Patenterteilung: **17.07.2013**
(21) Anmeldenummer: 11150836.2
(22) Anmeldetag: 13.01.2011
(51) Int. Cl.: G05B 19/05

(54) **Verfahren und System zur Analyse eines zeitlichen Ablaufverhaltens eines Steuerungsprogramms einer Industriesteuerung**
System and method for analysing a time behaviour of the execution of a control program in an industrial control device
Procédé et système d'analyse d'un comportement temporel lors de l'execution d'un programme de contrôl pour un contrôleur industriel

(43) Veröffentlichungstag der Anmeldung: 18.07.2012
(73) Patentinhaber: Siemens Aktiengesellschaft, 80333 München (DE)
(72) Erfinder: Albrecht, Andreas, 92712 Pirk (DE); Sehr, Hermann, 92280 Kastl (DE)

(56) Entgegenhaltungen:
- EP-A1- 1 746 473
- DE-A1-102005 020 507

## Beschreibung

Die Erfindung betrifft ein Verfahren zur Analyse eines zeitlichen Ablaufverhaltens eines Steuerungsprogramms einer Industriesteuerung, wobei das Steuerungsprogramm in einem Hauptbaustein und mehrere Programmbausteine unterteilt wird, der Hauptbaustein nach einem Anlauf zyklisch bearbeitet wird, die Programmbausteine ereignisgesteuert bearbeitet werden, wobei den Programmbausteinen eine Bearbeitungspriorität zugeordnet wird.

Des Weiteren betrifft die Erfindung ein System zur Analyse eines zeitlichen Ablaufverhaltens eines Steuerungsprogramms einer Industriesteuerung umfassend, die Industriesteuerung, eine Analyseeinheit, welche mit der Industriesteuerung über eine Kommunikationsverbindung verbunden ist.

Im Sinne der Erfindung wird unter Industriesteuerung vorzugsweise eine speicherprogrammierbare Steuerung (SPS) verstanden, dieses ist ein Automatisierungsgerät, das zur Steuerung oder Regelung einer Maschine oder einer Anlage in einem industriellen Umfeld eingesetzt wird. Bei einer zyklusorientierten SPS wird durch ein vom Hersteller fest eingespeichertes Betriebssystem dieser Zyklus kontrolliert. Das Steuerungsprogramm kann bedingt durch seine Programmbausteine Verzweigungen und bedingte Aufrufe beinhalten, welches unterschiedliche Laufzeiten zur Folge hat.

Für einen Anwender von Industriesteuerung gibt es derzeit keine Möglichkeit eine Verteilung der Rechenzeiten auf die einzelnen Programmbausteine zu analysieren, da die Programmbausteine in der Industriesteuerung mit unterschiedlichen Prioritäten ausgeführt werden und wiederum von Programmbausteinen mit höherer Priorität unterbrochen werden können. Damit kann ein Anwender nur ungefähr erkennen, wie viel Rechenzeit eine CPU der Industriesteuerung noch hat bzw. wie hoch die Auslastung dieser CPU ist.

Aus der DE 10 2005 020 507 ist die Einrichtung und Konditionierung von Automatisierungsgeräten bekannt, bei der in einer Analyseeinrichtung die erwarteten Abarbeitungszeiten von Programmen, Unterprogrammen und Prozeduren bei vorgebbaren Bedingungen rechnerisch ermittelt werden.

Es ist daher Aufgabe der vorliegenden Erfindung, dem Anwender eine Möglichkeit zur Optimierung des zeitlichen Ablaufverhaltens des Steuerungsprogramms zu geben, um die Effizienz der Industriesteuerung im Umfeld der Automatisierungstechnik zu erhöhen.

Verfahrensgemäß wird die Aufgabe mit den Merkmalen des Anspruchs 1 gelöst. Für die Programmbausteine werden jeweils eine Bearbeitungszeit, welche sich aus der Differenz des Zeitpunktes zum Bearbeitungsende und des Zeitpunktes zum Bearbeitungsanfang des jeweiligen Programmbausteins ergibt, ermittelt, dann wird in einem weiteren Schritt die jeweilige Bearbeitungszeit einen Bausteinbezeichner des jeweiligen Programmbausteins zugeordnet und diese Zuordnung in einer Ansicht grafisch dargestellt. Zuvor war es nur möglich für den Hauptbaustein, beispielsweise einem OB1-Baustein für die zyklische Bearbeitung, eine aktuelle Zykluszeit anzugeben. Hiermit konnte nur bedingt ein Rückschluss über die Verteilung der Last in der Industriesteuerung gezogen werden. Durch die Darstellung in einer grafischen Ansicht, beispielsweise auf einer Analyseeinheit, vorzugsweise einem Engineeringsystem, vorzugsweise einem an die Industriesteuerung angeschlossenem Programmiergerät, kann der Anwender sich nun ein klares Bild über die Lastverteilungen der einzelnen Programmbausteine in der Industriesteuerung machen und mit Optimierungsmaßnahmen in das zeitliche Ablaufverhalten des Steuerungsprogrammes eingreifen.

In einer vorteilhaften Ausgestaltung des Verfahrens werden zusätzlich zu den Bausteinbezeichner und der Bearbeitungszeit, die Bearbeitungspriorität des Programmbausteins in der Ansicht derart dargestellt, dass diese interaktiv veränderbar ist und die geänderte Bearbeitungspriorität dem betroffenem Programmbaustein zugeordnet wird und in dem Steuerungsprogramm berücksichtigt wird. Nach dem der Anwender mittels der grafischen Darstellung Kenntnis über das individuelle Verhalten der einzelnen Programmbausteine erlangt hat, kann er durch eine interaktive Bedienung in der Ansicht, beispielsweise mittels Ein-/Ausgabefenstern eine entsprechende Bearbeitungspriorität für den entsprechenden Programmbaustein umprogrammieren und in die Steuerung zurücksenden, so dass die Auswirkungen seiner Änderungen sofort für ihn sichtbar werden und eventuell durch die interaktive Bedienung weiter optimiert werden kann. Vorzugsweise kann der Anwender durch die ermittelten Zeit-Messdaten und durch Verschieben der Prioritäten die Unterbrechungen der einzelnen Programmbausteine beeinflussen.

Eine Optimierung kann weiterhin dadurch erfolgen, dass zusätzlich zur Bearbeitungszeit eine Ausführungsdauer eines jeden Programmbausteins ermittelt wird, wobei die Ausführungsdauer aus der Summe der Zeitdauern ermittelt wird in denen der Programmbaustein aktiv seine Programmanweisungen abarbeitet. Die Ausführungsdauer könnte auch als eine Nettolaufzeit eines Programmbausteins betrachtet werden. Die Nettolaufzeit ist also die Zeit, welche ein Programmbaustein ohne Unterbrechung für einen vollständigen Ablauf benötigen würde, also nur die Zeitabschnitte in denen der Programmbaustein aktiv arbeitet. Die Bearbeitungszeit könnte sodann als Bruttolaufzeit bezeichnet werden, also die Zeit die ein Programmbaustein mit Unterbrechungen von einem Startzeitpunkt bis zu einem Endzeitpunkt benötigt. Mit einer grafischen Darstellung der Bearbeitungszeit und der Ausführungszeit respektive Nettolaufzeit und Bruttolaufzeit wird die Entscheidung für Handlungsanweisungen des Anwenders hinsichtlich einer Optimierung erleichtert. Eine hohe Abweichung zwischen Brutto- und Nettolaufzeit signalisiert eine häufige bzw. lang andauernde Unterbrechung des Programmablaufes.

Vorteilhafter Weise wird eine Abweichung zwischen der Bearbeitungszeit und der Ausführungsdauer ermittelt, wobei bei Überschreiten der Abweichung über einen einstellbaren Wert ein Hinweis in der Ansicht generiert wird.

Weiterhin ist es vorteilhaft, wenn eine Kommunikationszeit ermittelt wird, welche sich aus den Zeitdauern in denen das Steuerungsprogramm mit Kommunikationsaufgaben für eine Kommunikation zu an der Industriesteuerung angeschlossenen Automatisierungskomponenten beschäftigt ist zusammensetzt, und diese Kommunikationszeit auch in der Ansicht dargestellt wird. Eine parallele Darstellung der Kommunikationszeit zu den Zeiten der Programmbausteine lässt eine Analyse der Kommunikationslast in der Industriesteuerung zu, von Vorteil ist es hier, die Kommunikationslast einmal grafisch darzustellen, da diese doch immerhin verhältnismäßig viel Rechenzeit beanspruchen.

In einer weiteren Ausgestaltung des Verfahrens ist es möglich für einen Programmbaustein weitere laufzeitrelevante Parameter interaktiv zu verändern und dadurch das zeitliche Ablaufverhalten des Steuerungsprogramms zu optimieren, wobei die jeweils geänderten Parameter unmittelbar in dem Steuerungsprogramm berücksichtigt werden. Die Darstellung und Aufbereitung der ermittelten oder gemessenen Zeitwerte werden in der Ansicht, beispielsweise in einer Windowsoberfläche, als ein animiertes Ablaufebenenmodel dargestellt. In dieser Ansicht können auch die Änderungen der Parameter erfolgen.

Für weitere Darstellungen werden auch eine minimale, eine maximale, eine aktuelle und eine summierte Bearbeitungszeit bzw. Ausführungsdauer ermittelt und in der Ansicht dargestellt.

Auch wird die Aufgabe durch ein System zur Analyse eines zeitlichen Ablaufverhaltens eines Steuerungsprogramms mit den Merkmalen des Anspruchs 7 gelöst. Ein Erfassungsmittel, welches in der Industriesteuerung angeordnet ist, ist dabei derart ausgestaltet, dass für die Programmbausteine jeweils eine Bearbeitungszeit, welche sich aus der Differenz des Zeitpunktes zum Bearbeitungsende und des Zeitpunktes zum Bearbeitungsanfang des jeweiligen Programmbausteines ergibt, zu ermitteln und die Bearbeitungszeit mit einem Bausteinbezeichner des jeweiligen Programmbausteins über die Kommunikationsverbindung an die Analyseeinheit weiterzugeben, wobei weiterhin die Analyseeinheit dazu ausgestaltet ist, die Zuordnungen von der Bearbeitungszeit zu dem Bausteinbezeichner in einer Ansicht grafisch darzustellen. Ein derartiges System ermöglicht einem Anwender der Industriesteuerung die Verteilung der Rechenzeiten auf die einzelnen Programmbausteine zu analysieren.

In einer weiteren Ausgestaltungsvariante des Systems ist die Analyseeinheit dazu ausgestaltet, zusätzlich zu den Bausteinbezeichner und der Bearbeitungszeit, die Bearbeitungpriorität des Programmbausteins in der Ansicht derart darzustellen, dass diese interaktiv veränderbar ist und die geänderte Bearbeitungspriorität dem betroffenen Programmbaustein über die Kommunikationsverbindung zu übermitteln damit diese in dem Steuerungsprogramm berücksichtigt wird. Dem Anwender wird es damit möglich Optimierungen des Ablaufverhaltens durchzuführen und die Wirksamkeit der Optimierungsmaßnahmen sofort zu überprüfen.

In einer weiterführenden Ausgestaltung ist das Erfassungsmittel dazu ausgestaltet, eine Ausführungsdauer eines jeden Programmbausteins zu ermitteln, wobei die Ausführungsdauer aus der Summe der Zeitdauern ermittelt wird in denen der Programmbaustein aktiv seine Programmanweisungen abarbeitet, und über die Kommunikationsverbindung an die Analyseeinheit weitergibt.

Dabei ist es vorteilhaft, dass die Analyseeinheit weiterhin dazu ausgestaltet ist, eine Abweichung zwischen der Bearbeitungszeit und der Ausführungsdauer zu ermitteln und bei Überschreiten der Abweichung über einen einstellbaren Wert ein Hinweis in der Ansicht zu generieren.

Da an der Industriesteuerung in der Regel weitere Automatisierungskomponenten angeschlossen sind, beispielsweise Ein-/Ausgabebaugruppen, welche mit der Industriesteuerung kommunizieren, ist es vorteilhaft, dass das Erfassungsmittel dazu ausgestaltet ist eine Kommunikationszeit, welche sich aus den Zeitdauern in denen das Steuerungsprogramm mit Kommunikationsaufgaben für eine Kommunikation zu an der Industriesteuerung angeschlossenen Automatisierungskomponenten beschäftigt ist zusammensetzt, zu ermitteln und diese über die Kommunikationsverbindung an die Analyseeinheit weiterzugeben.

Vorteilhafterweise wird in einer weiteren Ausgestaltung die Analyseeinheit derart ausgestaltet, dass für einen Programmbaustein weitere laufzeitrelevante Parameter interaktiv veränderbar sind und diese über die Kommunikationsverbindung an die Industriesteuerung weitergegeben werden können. Die Auswirkungen dieser Änderungen können sodann in der Ansicht sofort sichtbar werden.

Ein Ausführungsbeispiel des Verfahrens und des Systems wird in der Zeichnung näher erläutert. Es zeigen:
- FIG 1: ein System zur Analyse eines zeitlichen Ablaufverhaltens eines Steuerungsprogramms einer Industriesteuerung,
- FIG 2: die Ansicht einer Laufzeitstatistik mit nach dem Verfahren ermittelten Zeitwerten,
- FIG 3: eine prozentuale Zeitverteilung der ermittelten Zeiten,
- FIG 4: einen Verlauf einer Laufzeitverteilung in prozentualen Angaben,
- FIG 5: eine Anzeige mit einer Berücksichtigung der Kommunikationslast,
- FIG 6: die Kommunikationslast in Bezug auf den Laufzeitanteil von Programmbausteinen und
- FIG 7: eine Ansicht für ein animiertes Ablaufebenenmodell, wobei eine direkte Anpassung von laufzeitrelevanten Parametern möglich ist.

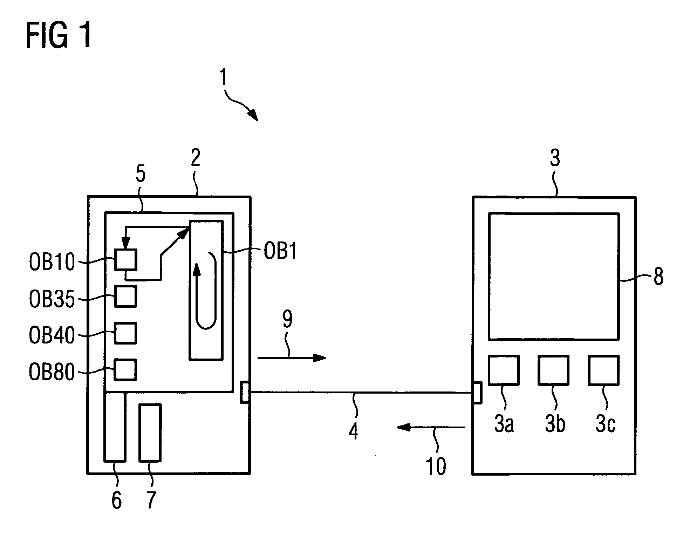

Gemäß FIG 1 ist ein System 1 zur Analyse eines zeitlichen Ablaufverhaltens eines Steuerungsprogramms 5 einer Industriesteuerung 2 dargestellt. Das System 1 umfasst im Wesentlichen die Industriesteuerung 2 und eine Analyseeinheit 3, wobei die Industriesteuerung 2 und die Analyseeinheit 3 mittels einer Kommunikationsverbindung 4 miteinander gekoppelt sind. Die Industriesteuerung 2 weist das Steuerungsprogramm 5 mit einem Hauptbaustein OB1 und mehreren Programmbausteinen OB10, OB35, OB40 und OB80 auf.

OBs sind dem Fachmann als sogenannte Organisationsbausteine in speicherprogrammierbaren Steuerungen bekannt. Es gibt beispielsweise einen OB1 für eine zyklische Bearbeitung, einen OB10 für einen Uhrzeitalarm, einen OB35 für einen periodischen Weckalarm, einen OB40 für einen Prozessalarm von Ein-/Ausgabebaugruppen, welcher bestimmte Zustände einer IO-Peripherie signalisiert, einen OB80 für einen Zykluszeitfehler, für den Fall, dass ein OB1-Zyklus eine eingestellte Zeitdauer überschreitet, einen OB100 für einen Anlauf bei einen Anlauf der SPS, von beispielsweise einem Stopp- zu einem Runübergang, einen OB122 für einen Baugruppenfehler, usw..

Ein Betriebssystem 6 in der Industriesteuerung 2 organisiert die internen Abläufe. Die zyklusorientierte Abarbeitung des Hauptbausteines OB1 ist durch einen ringförmigen Pfeil angedeutet. Am Beispiel des Programmbausteines OB10 ist mittels der Pfeile eine Unterbrechung des OB1 mit anschließender Rückkehr in den OB1 angedeutet.

Der Hauptbaustein OB1 wird nach einem Anlauf der Industriesteuerung 2 zyklisch bearbeitet und die Programmbausteine OB10, OB35, OB40 und OB80 werden ereignisgesteuert bearbeitet. Zusätzlich zu der Ereignissteuerung werden die Programmbausteine nach einem Prioritätsschema abgearbeitet, dazu ist jedem Programmbaustein eine Bearbeitungspriorität zugewiesen.

Ein Erfassungsmittel 7 ist dazu ausgestaltet, für die Programmbausteine OB10, OB35, OB40 und OB80 jeweils eine Bearbeitungszeit, welche sich aus der Differenz des Zeitpunktes zum Bearbeitungsende und des Zeitpunktes zum Bearbeitungsanfang des jeweiligen Programmbausteins OB10, OB35, OB40 und OB80 ergibt, zu ermitteln. Weiterhin ist das Erfassungsmittel 7 dazu ausgestaltet die Bearbeitungszeit mit einem Bausteinbezeichner des jeweiligen Programmbausteins OB10, OB35, OB40 und OB80, nämlich mit "OB10","OB35","OB40" und "OB80", zu versehen und über die Kommunikationsverbindung 4 an die Analyseeinheit weiterzugeben. Diese Weitergabe erfolgt mittels einer Übertragung 9, in welcher die Bearbeitungszeit, eine Ausführungsdauer und der Bausteinbezeichner an die Analyseeinheit 3 gesendet werden.

Die Analyseeinheit 3 ist dazu ausgestaltet, die Zuordnungen von der Bearbeitungszeit zu dem Bausteinbezeichner in einer Ansicht 8 grafisch darzustellen. Für die grafische Darstellung weist die Analyseeinheit 3 ein Aufbereitungsmittel 3a auf. Weiterhin ist die Analyseeinheit 3 dazu ausgestaltet, zusätzlich zu dem Bausteinbezeichner, beispielsweise "OB10", und der zugehörigen Bearbeitungszeit, die Bearbeitungspriorität des Programmbausteins, beispielsweise OB10, in der Ansicht 8 derart darzustellen, dass die Bearbeitungspriorität interaktiv veränderbar ist. Über ein Mittel 3c zum Absetzen geänderter Parameter kann die so geänderte Bearbeitungspriorität dem betroffenen Programmbaustein, beispielsweise OB10, über die Kommunikationsverbindung 4 mittels eines Änderungsbefehls 10 an das Steuerungsprogramm 5 übermittelt werden und in dem Steuerungsprogramm 5 sofort berücksichtigt werden.

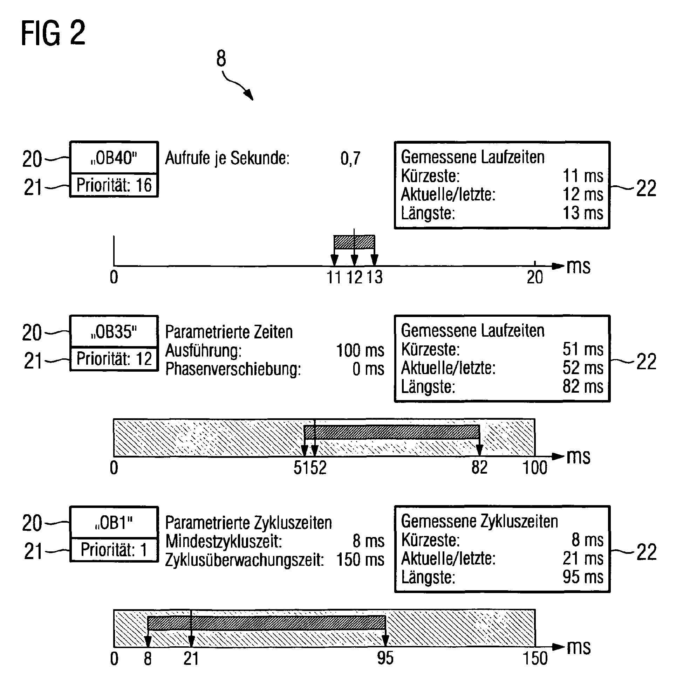

In den Figuren 2 bis 7 sind unterschiedliche Ansichten von Bausteinbezeichnern, Prioritäten, zugehörigen gemessenen Laufzeiten, wobei auch eine kürzeste, eine aktuelle und eine längste Laufzeit dargestellt werden sollen, gezeigt. Gemäß der FIG 2 ist eine Ansicht 8 für eine Laufzeitverteilung der Programmbausteine OB40,OB35 und OB1 dargestellt. Ein Feld für einen Bausteinbezeichner 20 weist den Text "OB40" auf. Unter diesem Feld ist ein weiteres Feld für eine Bearbeitungspriorität 21 angeordnet. Die Ansicht 8 ist dreigeteilt. Im oberen Drittel werden die Laufzeiten für den OB40, im mittleren Drittel die Laufzeiten für den OB35 und in dem unteren Drittel die Laufzeiten für den OB1 dargestellt. Da der OB40 ein Prozessalarm ist, gibt es für ihn keine Darstellung für eine parametrierte Zeit. Hingegen ist für den OB35 und den OB1 eine parametrierte Zeit dargestellt. Für den OB35 wurde eine parametrierte Ausführungszeit von 100 ms gewählt. Für den OB40 wurde eine parametrierte Zykluszeit, welcher einer maximalen Zyklusüberwachungszeit entspricht, von 150 ms gewählt.

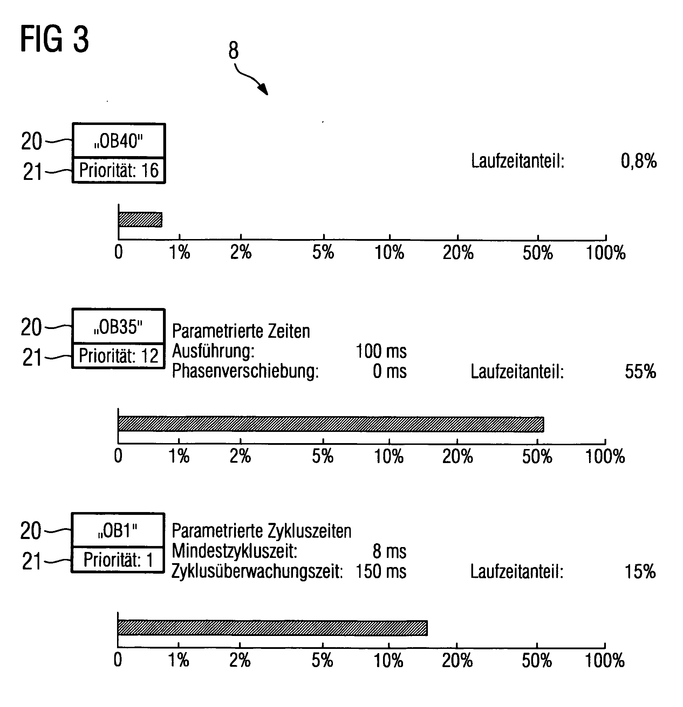

Ähnlich wie die dreiteilige Darstellung der Ansicht 8 aus FIG 2 ist gemäß FIG 3 auch eine dreiteilige Darstellung für den OB40, OB35 und OB1 gewählt. Allerdings ist hier die Ansicht 8 so konfiguriert, dass für die jeweiligen Programmbausteine eine prozentuale Ansicht der Laufzeitanteile für den Anwender gegeben ist.

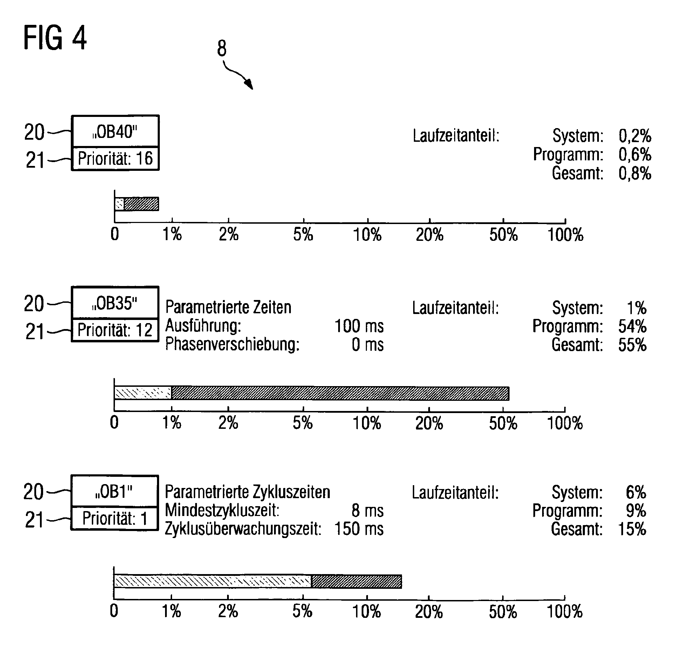

Als Ergänzung zu der Darstellung der Ansicht 8 aus FIG 3 wird mit der Ansicht 8 aus FIG 4 ein Verlauf einer Laufzeitverteilung auch in prozentualer Darstellung gezeigt. Die Auslastungsbalken der prozentualen Verteilung sind dabei zweigeteilt. Zum Einen wird die gemittelte Auslastung angegeben und zum Anderen die momentan vorherrschende Auslastung.

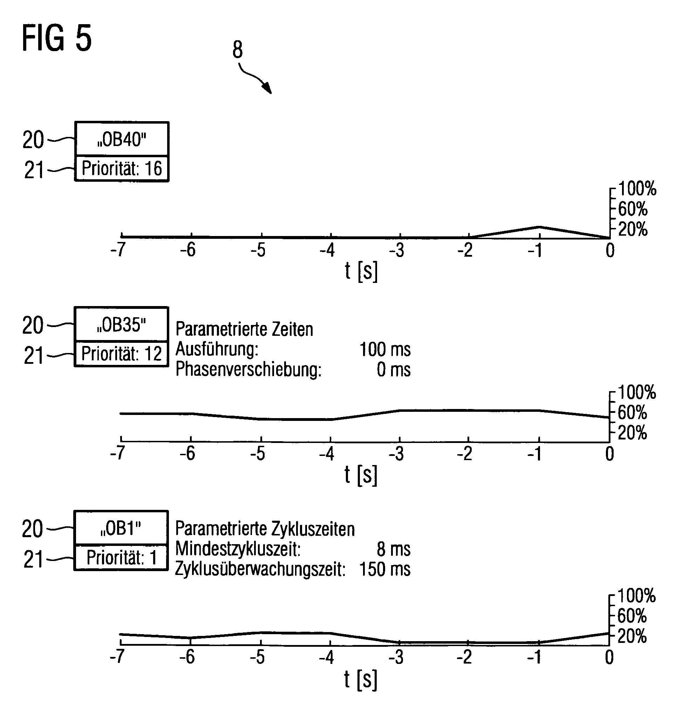

Mit der Ansicht gemäß FIG 5 wird in der grafischen Darstellung die Kommunikationslast berücksichtigt, wobei sich die Kommunikationslast aus einer Kommunikationszeit, welche sich aus den Zeitdauern in denen das Steuerungsprogramm mit Kommunikationsaufgaben für eine Kommunikation zu an der Industriesteuerung angeschlossenen Automatisierungskomponenten beschäftigt, zusammensetzt.

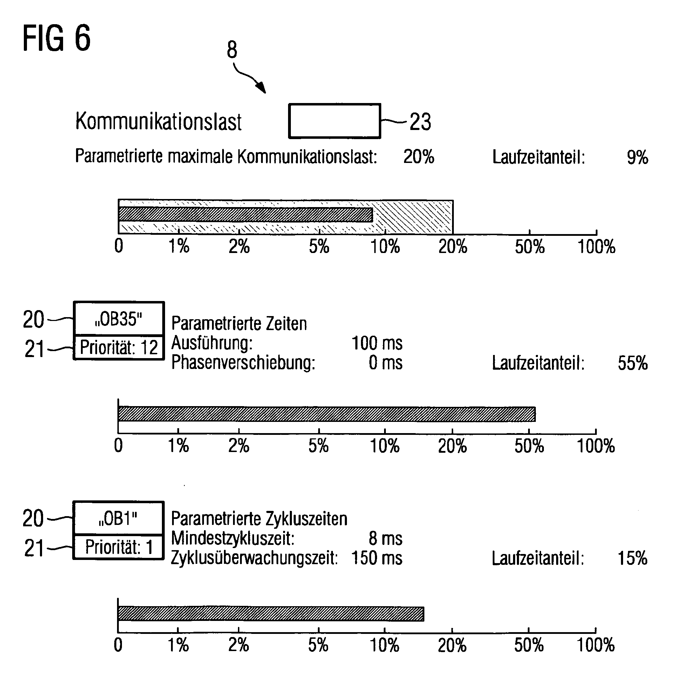

Eine weitere Darstellung der Kommunikationslast ist gemäß der Ansicht 8 aus FIG 6 gezeigt. Neben der prozentualen Anzeige der Kommunikationslast weist die Ansicht 8 ein Feld 23 zur Anzeige der Kommunikationszeit auf. Auch für die Ansicht 8 in FIG 6 wurde eine dreiteilige Darstellung gewählt. Im oberen Drittel ist eine parametrierte maximale Kommunikationslast von 20 % dargestellt. Innerhalb dieser maximalen Kommunikationslast von 20 % befindet sich ein Balken, welcher bis zu einer Kommunikationslast von 9 % geht, dieses entspricht der momentan gültigen Kommunikationslast. Im zweiten Drittel wird für den OB35 mit einer parametrierten Ausführungszeit von 100 ms ein Laufzeitanteil von 55 % angezeigt. Im unteren Drittel wird für den OB1 in der Ansicht 8 eine parametrierte Zyklusüberwachungszeit von 150 ms und ein Laufzeitanteil von 15 % angezeigt.

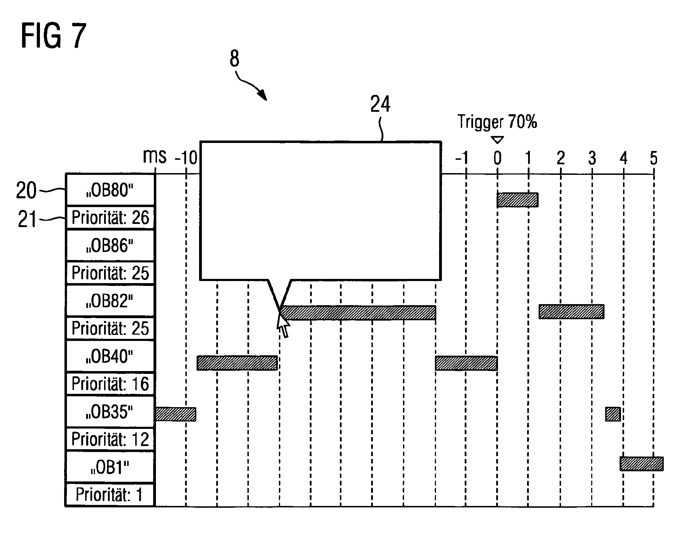

Gemäß der FIG 7 ist ein animiertes Ablaufebenenmodell mit der Ansicht 8 für die Programmbausteine OB1, OB35, OB40, OB82, OB86 und OB80 dargestellt. Die entsprechenden Bezeichner wie z.B. "OB80" sind in den jeweiligen Feldern für die Bausteinbezeichner 20 gezeigt. Für den OB80 ist beispielsweise eine Priorität von 26 in dem Feld 21 für die Bearbeitungspriorität angezeigt. Für jeden Programmbaustein existiert eine Zeile in der ein Balken gemäß seiner Bearbeitungszeit mehr oder weniger Lang dargestellt ist. In dieser Darstellung und der Aufbereitung der gemessenen Zeiten kann ein Anwender Änderungen, beispielsweise an der Bearbeitungspriorität, in der Oberfläche der Ansicht 8 vornehmen. Aber auch Änderungen an generell laufzeitrelevanten Parametern können in dieser Ansicht 8 erfolgen. Werden in diesem Ablaufebenen-Modell Änderungen vorgenommen, so sind die Auswirkungen der Änderungen sofort sichtbar.

In der Zeile für den OB82 ist ein Mauszeiger dargestellt. Dieser Mauszeiger befindet sich über dem Balken für die Ausführungszeit des OB82. Die Analyseeinheit 3 aus FIG 1 ist dabei derart ausgestaltet, dass wenn ein Mauszeiger sich über einem Ausführungszeitbalken befindet, ein Infofeld 24 aufgeblendet wird, in welchem weitere Parameter über den jeweiligen Programmbaustein angezeigt und geändert werden können.

## Patentansprüche

1. Verfahren zur Analyse eines zeitlichen Ablaufverhaltens eines Steuerungsprogramms (5) einer Industriesteuerung (2), wobei das Steuerungsprogramm (5) in einen Hauptbaustein (OB1) und mehrere Programmbausteine (OB10,OB35,OB40,OB80) unterteilt wird,
- der Hauptbaustein (OB1) nach einem Anlauf zyklisch bearbeitet wird,
- die Programmbausteine (OB10,OB35,OB40,OB80) ereignisgesteuert bearbeitet werden, wobei den Programmbausteinen (OB10,OB35,OB40,OB80) eine Bearbeitungspriorität (21) zugeordnet wird,
**dadurch gekennzeichnet, dass** für die Programmbausteine (OB10,OB35,OB40,OB80) jeweils
- eine Bearbeitungszeit, welche sich aus der Differenz des Zeitpunktes zum Bearbeitungsende und des Zeitpunktes zum Bearbeitungsanfang des jeweiligen Programmbausteins (OB10,OB35,OB40,OB80) ergibt, ermittelt wird,
- die jeweilige Bearbeitungszeit einem Bausteinbezeichner des jeweiligen Programmbausteins (OB10,OB35,OB40,OB80) zugeordnet werden und
- diese Zuordnungen in einer Ansicht (8) grafisch dargestellt werden.

2. Verfahren nach Anspruch 1, wobei zusätzlich zu dem Bausteinbezeichner und der Bearbeitungszeit, die Bearbeitungspriorität (21) des Programmbausteins (OB10,OB35,OB40,OB80) in der Ansicht (8) derart dargestellt wird, dass diese interaktiv veränderbar ist und die geänderte Bearbeitungspriorität dem betroffenem Programmbaustein zugeordnet wird und in dem Steuerungsprogramm (5) berücksichtigt wird.

3. Verfahren nach Anspruch 1 oder 2, wobei zusätzlich zur Bearbeitungszeit eine Ausführungsdauer eines jeden Programmbausteins ermittelt wird, wobei die Ausführungsdauer aus der Summe der Zeitdauern ermittelt wird in denen der Programmbaustein aktiv seine Programmanweisungen abarbeitet.

4. Verfahren nach Anspruch 3, wobei eine Abweichung zwischen der Bearbeitungszeit und der Ausführungsdauer ermittelt wird, wobei bei Überschreiten der Abweichung über einen einstellbaren Wert ein Hinweis in der Ansicht generiert wird.

5. Verfahren nach einem der Ansprüche 1 bis 4, wobei eine Kommunikationszeit, welche sich aus den Zeitdauern in denen das Steuerungsprogramm mit Kommunikationsaufgaben für eine Kommunikation zu an der Industriesteuerung (2) angeschlossenen Automatisierungskomponenten beschäftig ist zusammensetzt, ermittelt und diese in der Ansicht dargestellt wird.

6. Verfahren nach einem der Ansprüche 2 bis 5, wobei für einen Programmbaustein weitere Laufzeitrelevante Parameter interaktiv verändert werden und dadurch das zeitlichen Ablaufverhalten des Steuerungsprogramm (5) optimiert wird, wobei die jeweils geänderten Parameter unmittelbar in dem Steuerungsprogramm berücksichtig werden.

7. System (1) zur Analyse eines zeitlichen Ablaufverhaltens eines Steuerungsprogramms (5) einer Industriesteuerung (2) umfassend,
- die Industriesteuerung (2),
- eine Analyseeinheit (3), welche mit der Industriesteuerung (2) über eine Kommunikationsverbindung (4) verbunden ist, wobei das Steuerungsprogramm (5) einen Hauptbaustein (OB1) und mehrere Programmbausteine (OB10,OB35,OB40,OB80) aufweist, wobei
- der Hauptbaustein (OB1) nach einem Anlauf zyklisch bearbeitet wird,
- die Programmbausteine (OB10,OB35,OB40,OB80) ereignisgesteuert bearbeitet werden, wobei den Programmbausteinen (OB10,OB35,OB40,OB80) eine Bearbeitungspriorität (21) zugeordnet ist,
**gekennzeichnet durch**,
- ein Erfassungsmittel (7), welches in der Industriesteuerung (2) angeordnet ist, wobei das Erfassungsmittel (7) ausgestaltet ist,
- für die Programmbausteine (OB10,OB35,OB40,OB80) jeweils eine Bearbeitungszeit, welche sich aus der Differenz des Zeitpunktes zum Bearbeitungsende und des Zeitpunktes zum Bearbeitungsanfang des jeweiligen Programmbausteins (OB10,OB35,OB40,OB80) ergibt, zu ermitteln und
- die Bearbeitungszeit mit einem Bausteinbezeichner (20) des jeweiligen Programmbausteins (OB10,OB35,OB40,OB80) über die Kommunikationsverbindung (4) an die Analyseeinheit (3) weiterzugeben, wobei weiterhin
- die Analyseeinheit (3) dazu ausgestaltet ist, die Zuordnung von der Bearbeitungszeit zu dem Bausteinbezeichner in einer Ansicht (8) grafisch darzustellen.

8. System (1) nach Anspruch 7, wobei die Analyseeinheit (3) dazu ausgestaltet ist zusätzlich zu dem Bausteinbezeichner und der Bearbeitungszeit, die Bearbeitungspriorität des Programmbausteins (OB10,OB35,OB40,OB80) in der Ansicht (8) derart darzustellen, dass diese interaktiv veränderbar ist und die geänderte Bearbeitungspriorität (21) dem betroffenem Programmbaustein über die Kommunikationsverbindung (4) zu übermitteln damit diese in dem Steuerungsprogramm (5) berücksichtigt wird.

9. System (1) nach Anspruch 7 oder 8, wobei das Erfassungsmittel (7) weiterhin dazu ausgestaltet ist eine Ausführungsdauer eines jeden Programmbausteins zu ermitteln, wobei die Ausführungsdauer aus der Summe der Zeitdauern in denen der Programmbaustein aktiv seine Programmanweisungen abarbeitet ermittelt wird, und über die Kommunikationsverbindung (4) an die Analyseeinheit (3) weiterzugeben.

10. System (1) nach Anspruch 9, wobei die Analyseeinheit (3) dazu ausgestaltet ist eine Abweichung zwischen der Bearbeitungszeit und der Ausführungsdauer zu ermitteln und bei Überschreiten der Abweichung über einen einstellbaren Wert ein Hinweis in der Ansicht zu generieren.

11. System (1) nach einem der Ansprüche 7 bis 10, wobei das Erfassungsmittel (7) dazu ausgestaltet ist eine Kommunikationszeit, welche sich aus den Zeitdauern in denen das Steuerungsprogramm (5) mit Kommunikationsaufgaben für eine Kommunikation zu an der Industriesteuerung (2) angeschlossenen Automatisierungskomponenten beschäftig ist zusammensetzt, zu ermitteln und diese über die Kommunikationsverbindung (4) an die Analyseeinheit (3) weiter zugeben.

12. System (1) nach einem der Ansprüche 7 bis 11, wobei die Analyseeinheit (3) dazu ausgestaltet ist für einen Programmbaustein weitere Laufzeitrelevante Parameter interaktiv zu verändern und diese über die Kommunikationsverbindung (4) an die Industriesteuerung weiter zugeben.

## Claims

1. Method for analysing temporal flow characteristics of a control program (5) of an industrial controller (2), wherein the control program (5) is divided into a main module (OB1) and a plurality of program modules (OB10,OB35,OB40,OB80),
- the main module (OB1) is processed cyclically following initialisation,
- the processing of the program modules (OB10,OB35,OB40,OB80) is event-driven, wherein the program modules (OB10,OB35,OB40,OB80) are assigned a processing priority (21),
**characterised in that** for each of the program modules (OB10,OB35,OB40,OB80),
- a processing time which is derived from the difference between the time point at the end of processing and the time point at the start of processing of the respective program module (OB10,OB35,OB40,OB80) is calculated,
- the respective processing time is assigned to a module label of the respective program module (OB10,OB35,OB40,OB80), and
- these assignments are graphically represented in a display (8).

2. Method according to claim 1, wherein in addition to the module label and the processing time, the processing priority (21) of the program module (OB10,OB35,OB40,OB80) is represented in the display (8) such that it can be modified interactively and the changed processing priority is assigned to the relevant program module and is taken into consideration in the control program (5) .

3. Method according to claim 1 or 2, wherein provision is made for calculating an execution period of each program module in addition to the processing time, wherein the execution period is calculated from the sum of the time periods in which the program module actively services its program instructions.

4. Method according to claim 3, wherein provision is made for calculating a discrepancy between the processing time and the execution period, wherein a warning is generated in the display if the discrepancy exceeds a configurable value.

5. Method according to one of claims 1 to 4, wherein provision is made for calculating a communication time comprising the time periods in which the control program is occupied with communication tasks for communication with automation components that are attached to the industrial controller (2), and for displaying said communication time in the display.

6. Method according to one of claims 2 to 5, wherein further duration-relevant parameters for a program module are modified interactively, thereby optimising the temporal flow characteristics of the control program (5), wherein the changed parameters concerned are immediately taken into consideration in the control program.

7. System (1) for analysing temporal flow characteristics of a control program (5) of an industrial controller (2) comprising
- the industrial controller (2),
- an analysis unit (3), which is connected to the industrial controller (2) via a communication connection (4),
wherein the control program (5) features a main module (OB1) and a plurality of program modules (OB10,OB35,OB40,OB80), wherein
- the main module (OB1) is processed cyclically following initialisation,
- the processing of the program modules (OB10,OB35,OB40,OB80) is event-driven, wherein the program modules (OB10,OB35,OB40,OB80) are assigned a processing priority (21),
**characterised by**
- a recording means (7) which is arranged in the industrial controller (2), wherein said recording means (7) is configured so as to
- calculate a processing time for the program modules (OB10,OB35,OB40,OB80) in each case, said processing time being derived from the difference between the time point at the end of processing and the time point at the start of processing of the program module (OB10,OB35,OB40,OB80) concerned, and
- forward the processing time and a module label (20) of the respective program module (OB10,OB35,OB40,OB80) to the analysis unit (3) via the communication connection (4), wherein moreover
- the analysis unit (3) is configured so as to graphically represent the assignment of the processing time to the module label in a display (8).

8. System (1) according to claim 7, wherein the analysis unit (3) is configured so as to show the processing priority of the program module (OB10,OB35,OB40,OB80) in the display (8) in addition to the module label and the processing time, such that said processing priority can be modified interactively, and to send the changed processing priority (21) to the relevant program module via the communication connection (4) in order that this processing priority can be taken into consideration in the control program (5).

9. System (1) according to claim 7 or 8, wherein the recording means (7) is additionally configured so as to calculate an execution period of each program module, wherein the execution period is calculated from the sum of the time periods in which the program module actively services its program instructions, and to forward said execution period to the analysis unit (3) via the communication connection (4).

10. System (1) according to claim 9, wherein the analysis unit (3) is configured so as to calculate a discrepancy between the processing time and the execution period, and to generate a warning in the display if said discrepancy exceeds a configurable value.

11. System (1) according to one of claims 7 to 10, wherein the recording means (7) is configured so as to calculate a communication time comprising the time periods in which the control program (5) is occupied with communication tasks for communication with automation components that are attached to the industrial controller (2), and to forward said communication time to the analysis unit (3) via the communication connection (4).

12. System (1) according to one of claims 7 to 11, wherein the analysis unit (3) is configured so as to modify further duration-relevant parameters interactively for a program module, and to forward said parameters to the industrial controller via the communication connection (4).

## Revendications

1. Procédé d'analyse d'un comportement dans le temps d'un programme ( 5 ) de commande d'une commande ( 2 ) industrielle, dans lequel on subdivise le programme ( 5 ) de commande en un module ( OB1 ) principal et en plusieurs modules ( OB10, OB35, OB40,OB80 ) de programme,
- on traite cycliquement le module ( OB1 ) principal après une mise en marche,
- les modules ( OB10, OB35, OB40,OB80 ) de programme sont traités d'une manière commandée par évènement, une priorité ( 21 ) de traitement étant affectée aux modules ( OB10, OB35, OB40,OB80 ) de programme,
**caractérisé en ce que** pour les modules ( OB10, OB35, OB40,OB80 ) de programme respectivement
- on détermine une durée de traitement, qui est donnée par la différence entre l'instant de la fin du traitement et l'instant du début du traitement du module ( OB10, OB35, OB40,OB80 ) de programme respectif,
- on affecte la durée de traitement respective à un indicateur du module ( OB10, OB35, OB40,OB80 ) de programme respectif et
- on représente ces affectations graphiquement dans une vue ( 8 ).

2. Procédé suivant la revendication 1, dans lequel en plus de l'indicateur de module et de la durée de traitement, on représente la priorité ( 21 ) de traitement du module ( OB10, OB35, OB40,OB80 ) de programme dans la vue ( 8 ), de manière à pouvoir la modifier interactivement et de manière à ce que la priorité de traitement modifiée soit associée au module de programme concerné et soit prise en compte dans le programme ( 5 ) de commande.

3. Procédé suivant la revendication 1 ou 2, dans lequel, en plus de la durée de traitement, on détermine une durée de réalisation de chaque module de programme, la durée de réalisation étant déterminée à partir de la somme des durées, dans lesquelles le module de programme élabore activement ses instructions de programme.

4. Procédé suivant la revendication 3, dans lequel on détermine un écart entre la durée de traitement et la durée de réalisation en produisant une indication dans la vue, si l'écart dépasse une valeur réglable.

5. Procédé suivant l'une des revendications 1 à 4, dans lequel on détermine et on représente dans la vue une durée de communication, qui se compose des durées pendant lesquelles le programme de commande s'occupe de tâches de communication pour une communication avec des composants d'automatisation raccordés à la commande ( 2 ) industrielle.

6. Procédé suivant l'une des revendications 2 à 5, dans lequel on modifie interactivement pour un module de programme d'autres paramètres pertinents du point de vue du temps de fonctionnement et on optimise ainsi le comportement dans le temps du programme ( 5 ) de commande, les paramètres modifiés étant pris en compte directement dans le programme de commande.

7. Système ( 1 ) d'analyse d'un comportement dans le temps d'un programme ( 5 ) de commande d'une commande ( 2 ) industrielle comprenant,
- la commande ( 2 ) industrielle,
- une unité ( 3 ) d'analyse, qui est reliée à la commande ( 2 ) industrielle par une liaison ( 4 ) de communication, le programme ( 5 ) de commande ayant un module ( OB1 ) principal et plusieurs modules ( OB10, OB35, OB40,OB80 ) de programme, dans lequel
- on traite cycliquement le module ( OB1 ) principal après une mise en marche,
- les modules ( OB10, OB35, OB40,OB80 ) de programme sont traités d'une manière commandée par évènement, une priorité ( 21 ) de traitement étant affectée aux modules ( OB10, OB35, OB40,OB80 ) de programme,
**caractérisé par**
- un moyen ( 7 ) de détection, qui est disposé dans la commande ( 2 ) industrielle, le moyen ( 7 ) de détection étant conformé pour
- déterminer pour les modules ( OB10, OB35, OB40,OB80 ) de programme, respectivement un temps de traitement, une durée de traitement, qui est donnée par la différence entre l'instant de la fin du traitement et l'instant du début du traitement du module ( OB10,OB35,OB40,OB80 ) de programme respectif et
- acheminer le temps de traitement avec un indicateur ( 20 ) du module ( OB10, OB35, OB40, OB80 ) de programme respectif à l'unité ( 3 ) d'analyse par la liaison ( 4 ) de communication, dans lequel en outre
- l'unité ( 3 ) d'analyse est conformée pour représenter graphiquement dans une vue l'affectation du temps de traitement à l'indicateur de module.

8. Système ( 1 ) suivant la revendication 7, dans lequel l'unité ( 3 ) d'analyse est conformée pour représenter dans la vue ( 8 ), en plus de l'indicateur de module et de la durée de traitement, la priorité de traitement du module ( OB10, OB35, OB40, OB80 ) de programme, de manière à ce que cette vue puisse être modifiée interactivement et de manière à transmettre la priorité ( 21 ) de traitement modifiée au module de programme concerné par l'intermédiaire de la liaison ( 4 ) de communication et de manière ainsi à en tenir compte dans le programme ( 5 ) de commande.

9. Système ( 1 ) suivant la revendication 7 ou 8, dans lequel le moyen ( 7 ) de détection est conformé en outre pour déterminer une durée de réalisation d'un module de programme, la durée de réalisation étant déterminée par la somme des durées, dans lesquelles le module de programme élabore activement ses instructions de programme et étant acheminées à l'unité ( 3 ) d'analyse par la liaison ( 4 ) de communication.

10. Système ( 1 ) suivant la revendication 9, dans lequel l'unité ( 3 ) d'analyse est conformée pour déterminer un écart entre la durée de traitement et la durée de réalisation et pour produire une indication dans la vue, si l'écart dépasse une valeur réglable.

11. Système ( 1 ) suivant l'une des revendications 7 à 10, dans lequel le moyen ( 7 ) de détection est conformé pour déterminer une durée de communication, qui se compose des durées pendant lesquelles le programme ( 5 ) de commande est occupé par des tâches de communication pour une communication avec des composants d'automatisation raccordés à la commande ( 2 ) industrielle et pour l'acheminer à l'unité ( 3 ) d'analyse par la liaison ( 4 ) de communication.

12. Système ( 1 ) suivant l'une des revendications 7 à 11, dans lequel l'unité ( 3 ) d'analyse est conformée pour modifier interactivement pour un module de programme d'autres paramètres pertinents pour la durée de fonctionnement et pour les acheminer à la commande industrielle par la liaison ( 4 ) de communication.
